# EUROPEAN PATENT SPECIFICATION

(11) **EP 4 549 516 B1**
(45) Date of publication and mention of the grant of the patent: **29.07.2026**
(21) Application number: 24841407.0
(22) Date of filing: 04.07.2024
(51) Int. Cl.: C10C 3/00, C08L 95/00, C21B 7/12, C10C 3/06, B22D 41/46, C04B 35/10, C04B 35/63, C04B 35/66

(54) **PETROLEUM-BASED SOFT PITCH MIXTURE AND CLOSING MATERIAL FOR MOLTEN METAL TAPPING HOLE**
WEICHE PECHMISCHUNG AUF ERDÖLBASIS UND VERSCHLUSSMATERIAL FÜR ABSTICHLÖCHER IN METALLSCHMELZEN
MÉLANGE DE BRAI GRAS À BASE DE PÉTROLE ET MATÉRIAU DE FERMETURE POUR TROU DE COULÉE DE MÉTAL FONDU

(30) Priority: 10.08.2023 JP 2023130798
(43) Date of publication of application: 07.05.2025
(73) Proprietor: JFE Chemical Corporation, Tokyo 111-0051 (JP)
(72) Inventor: SAKAI, Minoru, Tokyo, 111-0051 (JP); SEKIGUCHI, Junji, Tokyo, 111-0051 (JP); TANAKA, Yoshiaki, Tokyo, 111-0051 (JP)
(74) Representative: Grünecker Patent- und Rechtsanwälte PartG mbB
(86) International application number: PCT/JP2024/024185
(87) International publication number: WO 2025/033040

(56) References cited:
- EP-A2- 1 130 077
- JP-A- 2006 027 956
- JP-A- 2006 028 423
- JP-A- 2014 040 607
- JP-A- 2020 093 942
- JP-A- S5 262 320

## Description

### Technical Field

The present invention relates to a petroleum-based soft pitch mixture and a closing material for molten metal tapping hole using the same as a binder.

### Background Art

Anhydrous tar obtained by subjecting coal tar to a dehydration treatment has been conventionally used as a binder for a closing material for molten metal tapping hole (hereinafter, also referred to as a "mud material") such as a blast furnace tapping hole closing material and an electric furnace tapping hole closing material, and a binder for paint, and the like. Among these, regarding the mud material, Patent Literature 1 discloses that anhydrous tar having a high fixed carbon amount is used as a binder for refractory raw materials such as agalmatolite, chamotte, and alumina, and refractory materials such as carbonaceous materials, silicon carbide, silicon nitride, and clay. Patent Literature 2 discloses that a tar-based soft pitch obtained by tar distillation is used as a binder for a mud material.

### Citation List

### Patent Literature

Patent Literature 1: JP 2003-286513 A
Patent Literature 2: JP 2006-028423 A

### Summary of Invention

### Technical Problem

The anhydrous tar described in Patent Literature 1 provides an excellent mud material. Since the anhydrous tar is produced from a coal-based coal tar raw material, the anhydrous tar contains a large amount of polycyclic aromatic hydrocarbons typified by benzo [a] pyrene and naphthalene. Therefore, there is a problem that the anhydrous tar is volatilized in a high-temperature environment and adversely affects the environment. The anhydrous tar preferably has viscosities suitable for various applications, but it is not easy to adjust the viscosity of the anhydrous tar.

Furthermore, in the binder described in Patent Literature 2, the density of a molded product increases as a carbonization yield increases, and the strength of the molded product can be improved, but the coal tar based raw material has a problem that the polycyclic aromatic hydrocarbon described above may be diffused, which adversely affects the environment.

It is an object of the present invention to provide a petroleum-based soft pitch mixture which has a low concentration of benzo [a] pyrene and naphthalene as a typical polycyclic aromatic hydrocarbon and can be easily adjusted in viscosity, and to further provide a closing material for molten metal tapping hole which emits a small amount of a polycyclic aromatic hydrocarbon during use.

### Solution to Problem

The present inventors have conducted intensive studies in order to achieve the above object. As a result, the present inventors have found that a mixture obtained by mixing a petroleum-based soft pitch having a low softening point with a distilled oil which is a distilled fraction in a specific boiling point range has a small content of a polycyclic aromatic hydrocarbon and does not adversely affect the environment.

The present invention has been completed by further conducting studies based on such findings, and the gist of the present invention is as follows.
[1] A petroleum-based soft pitch mixture obtained by mixing:
   a petroleum-based soft pitch having a softening point of 40°C or higher and lower than 150°C; and
   a distilled oil having a boiling point range of 230°C to 280°C, wherein
   a content of the distilled oil is 10% by mass to 45% by mass,
   the balance being the petroleum-based soft pitch and unavoidable impurities,
   wherein a content of benzo [a] pyrene is less than 200 ppm by mass, and a content of naphthalene is less than 0.70% by mass.
[2] The petroleum-based soft pitch mixture according to [1], having a viscosity at 60°C of 100 mPa·s to 2400 mPa·s.
[3] A closing material for molten metal tapping hole, containing the petroleum-based soft pitch mixture according to any one of [1] to [2], and a refractory raw material.
[4] The closing material for molten metal tapping hole according to [3], wherein a mixing ratio of the petroleum-based soft pitch mixture with respect to 100 parts by mass of a total amount of the refractory raw material is 10 parts by mass to 25 parts by mass.

### Advantageous Effects of Invention

According to the present invention, it is possible to obtain a petroleum-based soft pitch mixture in which the concentration of benzo [a] pyrene and naphthalene as a typical polycyclic aromatic hydrocarbon can be kept low and the viscosity can be easily adjusted depending on an application. A closing material for molten metal tapping hole using the petroleum-based soft pitch mixture as a binder can reduce the amount of the polycyclic aromatic hydrocarbon released.

### Description of Embodiments

Hereinafter, the present invention will be described in more detail.

### [Petroleum-Based Soft Pitch Mixture]

A petroleum-based soft pitch mixture of the present invention is a mixture of a specific petroleum-based soft pitch obtained by distillation and heat treatment of a petroleum-based heavy oil and a distillation fraction in a specific boiling point range (hereinafter, also referred to as "distilled oil") obtained by distillation of petroleum itself or distillation of coal-based or petroleum-based tar.

### [Petroleum-Based Soft Pitch]

The petroleum-based soft pitch of the present invention is produced by a distillation step and a subsequent thermal reforming step using a petroleum-based heavy oil having an atomic number ratio of carbon to hydrogen (C/H) of 0.70 or more as a raw material. More specifically, the petroleum-based soft pitch is as follows. The petroleum-based heavy oil is distilled by atmospheric distillation (as an example, the petroleum heavy oil is distilled in a distillation column at about 320°C for 1.0 hour). A fraction of less than 280°C is distilled off, and then a residue distilled off is heat-treated at 300°C to 380°C for about 6.0 hours to obtain the petroleum-based soft pitch. The obtained petroleum-based soft pitch was thermally filtered to remove a solid content. As described above, the obtained petroleum-based soft pitch has a softening point of 40°C or higher and lower than 150°C. This is because when the softening point is lower than 40°C, fixed carbon is low, and when the softening point is 150°C or higher, the viscosity is high and the fluidity is low. The softening point is preferably 40°C to 140°C, more preferably 40°C to 110°C, still more preferably 40°C to 70°C, and most preferably 40°C to 57°C. The softening point can be adjusted by a temperature of a heat treatment temperature and a treatment time, and is optionally adjusted by re-mixing light components distilled off by the distillation or the heat treatment.

The obtained petroleum-based soft pitch has a boiling of about 100°C or higher, and is composed of many complicated components. Examples of the component include linear fatty acids typified by pentadecane (C₁₅H₃₂) and compounds thereof, phenanthrene (C₁₄H₁₀) as a tricyclic aromatic hydrocarbon, and compounds thereof.

The petroleum-based heavy oil is a heavy crude oil whose specific gravity at 15/4°C is classified as 0.903 or more in the physical properties of a crude oil of petroleum.

As the properties of the petroleum-based heavy oil, the fixed carbon is preferably 1.0% by mass to 40.0% by mass, and more preferably 5% by mass to 30% by mass.

The atomic number ratio of carbon to hydrogen (C/H) is preferably in the range of 0.70 to 1.30, and more preferably in the range of 0.75 to 1.25.

### [Distilled Oil]

As described above, the distilled oil refers to a specific distilled fraction obtained by distillation of petroleum itself or distillation of coal-based or petroleum-based tar, and the distilled oil of the present invention is a fraction having a boiling point range of 230°C to 280°C. This is because when the boiling point is lower than 230°C, the fixed carbon is low, and when the boiling point is higher than 280°C, the viscosity is high.

An object to be distilled is petroleum itself, or coal-based or petroleum-based tar, but petroleum itself or petroleum-based tar is preferable from the viewpoint of a low content of a polycyclic aromatic hydrocarbon such as benzo [a] pyrene and naphthalene.

By mixing the distilled oil having a boiling point range as described above with the petroleum-based soft pitch described above, a petroleum-based soft pitch mixture containing almost no polycyclic aromatic hydrocarbon is obtained. That is, the content of benzo [a] pyrene to be described later can be suppressed to less than 200 ppm by mass, and the content of naphthalene can be suppressed to less than 0.70% by mass.

### [Polycyclic Aromatic Hydrocarbon]

The polycyclic aromatic hydrocarbon is a hydrocarbon in which only an aromatic ring containing no heteroatom or substituent such as nitrogen, oxygen, or sulfur is fused. The polycyclic aromatic hydrocarbon is also referred to as a fused cyclic hydrocarbon, and there are many substances as the polycyclic aromatic hydrocarbon. For example, there are naphthalene having two simplest six-membered rings (benzene rings), three anthracenes and phenanthrenes, four pyrenes and chrysenes, five benzopyrenes, and the like, and in addition, there are also many substances of six or more. As typified by benzo [a] pyrene, there are many substances having toxicity such as carcinogenicity and having volatility.

### [Benzo [a] pyrene, Naphthalene]

The present inventors have focused on benzo [a] pyrene and naphthalene among the polycyclic aromatic hydrocarbons contained in the petroleum-based soft pitch mixture. The hydrocarbon is a substance representing the polycyclic aromatic hydrocarbon, and is a substance that adversely affects the environment such as carcinogenicity. It is therefore important to limit the content of these substances.

First, benzo [a] pyrene is a polycyclic aromatic hydrocarbon in which 5 benzene rings are bonded, and the chemical formula thereof is represented by C₂₀H₁₂. Benzo [a] pyrene is a volatile substance having a boiling point of 310°C to 312°C, and is a substance recognized to be carcinogenic to humans. Examples of the isomer include benzo [e] pyrene having different arrangement of benzene rings.

The content of benzo [a] pyrene in the petroleum-based soft pitch mixture of the present invention is less than 200 ppm by mass. This is because the amount of a carcinogenic substance is increased at 500 ppm by mass or more. The content is preferably less than 160 ppm by mass.

Next, naphthalene is a simplest polycyclic aromatic hydrocarbon in which 2 benzene rings are bonded, and the chemical formula thereof is represented by C₁₀H₈. Naphthalene has a boiling point of 218°C, is more volatile, is flammable, is sensitized, and is also a carcinogen.

The content of naphthalene in the petroleum-based soft pitch mixture of the present invention is less than 0.70% by mass. This is because when the content is 1.00% by mass or more, naphthalene becomes a specific chemical substance. The content is preferably preferably 0.55% by mass or less.

However, when a coal-based pitch is used, the coal-based pitch contains a large amount of polycyclic aromatic hydrocarbon, and therefore benzo [a] pyrene is contained in an amount of about 500 ppm by mass or more, and naphthalene is contained in an amount of 3% by mass or more. Therefore, the petroleum-based soft pitch mixture of the present invention has a low content of benzo [a] pyrene and naphthalene, and is an excellent material in the environment.

The measurement content of the polycyclic aromatic hydrocarbon such as benzo [a] pyrene and naphthalene can be determined by gas chromatographic mass spectrometry.

### [Viscosity Adjustment and Mixing Ratio]

When a petroleum-based soft pitch mixture is mixed as a binder with refractory raw materials to produce a mud material, the viscous property (viscosity) of the binder greatly affects hardness (durability) required as a refractory material (mud material). Therefore, it is necessary to make the viscosity as the binder appropriate. Here, the hardness required as the mud material can be measured using a needle penetration type hardness tester, and the hardness is preferably 7000 N to 4000 N.

In the petroleum-based soft pitch mixture of the present invention, a petroleum-based soft pitch mixture having an optional viscosity can be obtained by changing a mixing ratio between the petroleum-based soft pitch and the distilled oil. For the application of the mud material, the viscosity of the petroleum-based soft pitch mixture at 60°C is preferably in the range of 100 mPa·s to 2400 mPa·s. If the viscosity at 60°C is less than 100 mPa·s, the tackiness as the binder is insufficient, and the fixed carbon is reduced, so that disadvantages such as deterioration of durability may occur. Meanwhile, when the viscosity at 60°C is more than 2400 mPa·s, the amount of the petroleum-based soft pitch mixture for obtaining the required filling property increases, which may cause disadvantages such as an increase in porosity and a decrease in durability. The viscosity is more preferably 400 mPa·s to 1200 mPa·s.

The content of the fixed carbon of the petroleum-based soft pitch mixture is preferably 20.0% by mass to 45.0% by mass, and the atomic number ratio of carbon to hydrogen (C/H) is preferably 0.80 to 1.30. Within this range, a hardness increase rate decreases.

The viscosity can be adjusted as described above by containing a petroleum-based soft pitch (A) and a distilled oil (B) at a mass ratio (%) of A:B = 55 to 90:45 to 10. That is, the petroleum-based soft pitch mixture of the present invention is a mixture obtained by mixing a petroleum-based soft pitch (A) having a softening point of 40°C or higher and lower than 150°C with a distilled oil (B) having a boiling point range of 230°C to 280°C. The mixture is a mixture in which the content of the distilled oil (B) is 10% by mass to 45% by mass, and the balance is the petroleum-based soft pitch (A) and unavoidable impurities. Furthermore, a preferred mixing ratio is A:B = 71 to 90:29 to 10, and the most preferred mixing ratio is A:B = 76 to 86:24 to 14.

A method for mixing the petroleum-based soft pitch (A) with the distilled oil (B) is not particularly limited, and the petroleum-based soft pitch (A) and the distilled oil (B) may be mixed using a normal mixing apparatus according to the mixing ratio thereof.

### [Unavoidable Impurities of Mixture]

When the aforementioned petroleum-based soft pitch and tar or petroleum distilled oil are mixed, a tar residue or the like may be mixed as impurities. The content of these impurities of 0.1% by mass or less is acceptable.

### [Closing Material for Molten Metal Tapping Hole (Mud Material)]

When a conventional mud material using a tar-based soft pitch (anhydrous tar) as a binder is exposed to a high atmosphere temperature particularly in ironworks or steelworks, volatile components such as naphthalene are volatilized, and thus the softness of the mud material is lost, which may make it difficult to use the mud material. Meanwhile, the mud material of the present invention is excellent in storage stability. That is, even if the mud material is stored for a long period of time, the properties of the mud material such as the softness (hardness) of the mud material are not changed, and the volatile component such as naphthalene is small, and thus the working environment and the like is not adversely affected.

The petroleum-based soft pitch mixture according to the present invention is useful for many applications such as mud materials, refractory materials, impregnation materials for carbon materials, binders for carbon materials, and paint binders. Hereinafter, a case of being used for the mud material will be described as an example.

The mud material of the present invention contains a petroleum-based soft pitch mixture and refractory raw materials. As the refractory raw materials, conventionally known refractory raw materials for a mud material can be used. Examples thereof include agalmatolite, chamotte (an aggregate of a refractory brick), alumina (bauxite), a carbonaceous material (graphite, coke, and the like), silicon carbide, silicon nitride, and clay (kaolin clay).

### [Mixing Ratio of Mud material]

A closing material for molten metal tapping hole (mud material) of the present invention is obtained by mixing the above-described petroleum-based soft pitch mixture of the present invention at a ratio of 10 parts by mass to 25 parts by mass with respect to 100 parts by mass of the total amount of the above-described refractory raw materials. If the mixing ratio of the petroleum-based soft pitch mixture is less than 10 parts by mass, the lubricity of the mud material is lowered, so that disadvantages may occur, for example, the required amount of the mud material cannot be filled. Meanwhile, when the content is more than 25 parts by mass, disadvantages such as an increase in porosity, a decrease in durability, and occurrence of gas blowing during opening due to undrying may occur. Therefore, the mixing ratio of the petroleum-based soft pitch mixture is preferably 10 parts by mass to 25 parts by mass. The mixing ratio is more preferably 15 parts by mass to 20 parts by mass.

A method for producing the mud material is a method for mixing an appropriate amount of the petroleum-based soft pitch mixture with the above-mentioned refractory raw materials. The method is not particularly limited, and mixing may be performed using a normal mixing apparatus according to each mixing ratio.

The above-described mud material of the present invention is less likely to have a change in softness (hardness). A hardness increase rate in a heat retention test to be described later is 30% or less, and a remarkably excellent effect is exhibited as compared with a conventional mud material.

### Examples

Hereinafter, the present invention will be described more specifically based on Examples. However, the following Examples are merely intended to illustrate and describe the present invention in more detail, and do not limit the scope of rights of the present invention. Note that "parts", "%", and "ppm" described below are on a mass basis unless otherwise specified.

### [Example 1]

100 parts of a petroleum-based heavy oil having a carbon concentration of 91.1% and a hydrogen concentration of 7.8%, that is, an atomic number ratio of carbon to hydrogen (C/H) of 0.97 was distilled at about 320°C for 1.0 hour in a distillation column to remove a fraction having a boiling point of lower than 280°C, and then subjected to a heat treatment step at 360°C for 6.0 hours to obtain a petroleum-based soft pitch A. The heat treatment step was performed at 380°C for 6.0 hours to obtain a petroleum-based soft pitch B. The obtained petroleum-based soft pitches A and B were thermally filtered to remove a solid content. As a result, no solid content such as a petroleum-based soft pitch tar residue was contained.

Here, during the distillation of the petroleum-based heavy oil, a fraction of 230°C to 280°C was collected as a distilled oil. The distilled oil contained no solid content.

The properties of the petroleum-based heavy oil as a raw material described above, the obtained distilled oil, and the petroleum-based soft pitches A and B were measured by the following measurement methods. The results are shown in Table 1.

### (Measurement Conditions of Viscosity)

The viscosity was measured using a Brookfield B-type rotational viscometer in accordance with "Viscosity of Liquid - Measurement Method" in JIS Z 8803 (1991).

### (Measurement Conditions of Softening Point)

Measurement was performed in accordance with "6. Method for measuring softening point of tar pitch (ringand-ball method)" of JIS K 2425 (1983).

### (Measurement Conditions of Fixed Carbon)

Measurement was performed using an electric furnace in accordance with "9. Fixed Carbon Quantification Method" of JIS K 2425 (1983).

### (Measurement Conditions of Moisture)

Measurement was performed by a Karl Fischer method by volumetric titration in accordance with JIS K 0068 (2001).

### [Measurement Conditions of Content of Benzo [a] pyrene and Naphthalene]

Measurement was performed by a gas chromatograph mass spectrometer, and quantification was performed by an internal standard method.

**[Table 1]**

| Measurement property | Raw material: petroleum-based heavy oil | Distilled oil | Petroleum-based soft pitch A | Petroleum-based soft pitch B |
|---|---|---|---|---|
| Boiling point (°C) | - | 230 to 280 | - | - |
| Viscosity at 60°C (mPa·s) | 38 | 17 | 25000 | 32000 |
| Softening point (°C) | - | - | 54 | 68 |
| Fixed carbon (% by mass) | 22.0 | 6.0 | 42.0 | 47.0 |
| Atomic number ratio of carbon to hydrogen (C/H) | 0.97 | 0.78 | 1.06 | 1.17 |
| Moisture (% by mass) | 0.8 | 0.1 | 0.1 | 0.1 |
| Content of benzo [a] pyrene (mass ppm) | 170 | 10 | 180 | 170 |
| Content of naphthalene (% by mass) | 0.80 | 0.50 | 0.20 | 0.05 |

The petroleum-based soft pitch A or B obtained in Table 1 above and the distilled oil were mixed in proportions shown in Table 2 below to obtain petroleum-based soft pitch mixtures (Invention Examples 1 to 5 and Comparative Example 1). The properties thereof are shown in Table 2, and 20 g of the obtained petroleum-based soft pitch mixture was put in a beaker and left in an atmosphere at 35°C for 1 week to measure a naphthalene content. The results are shown in Table 2.

As Comparative Example 2, anhydrous tar was produced by heating and dehydrating coal tar to 235°C over 24 hours in a heating pot. The viscosity of the anhydrous tar at 60°C was 280 mPa·s, the content of the fixed carbon was 32% by mass, the content of the moisture was 0.1% by mass, the content of benzo [a] pyrene was 500 mass ppm or more, and the content of naphthalene was 10.90% by mass. Furthermore, 20 g of the obtained anhydrous tar was put in a beaker and left in an atmosphere at 35°C for 1 week, and the content of naphthalene was measured. As a result, the content of naphthalene was 8.90% by mass.

**[Table 2]**

| No. | Raw material | | | Immediately after producing | | | | | After being left |
|---|---|---|---|---|---|---|---|---|---|
| | Petroleum-based soft pitch mixture | | Anhydrous tar (% by mass) | Viscosity at 60°C (mPa·s) | Fixed carbon (% by mass) | Atomic number ratio of carbon to hydrogen (C/H) | Content of benzo [a] pyrene (mass ppm) | Content of naphthalene (% by mass) | Content of naphthalene (% by mass) |
| | Content of benzo [a] pyrene (mass ppm) | Distilled oil (% by mass) | | | | | | | |
| Invention Example 1 | (A) 85 | 15 | - | 2360 | 36.6 | 1.02 | 155 | 0.54 | 0.11 |
| Invention Example 2 | (A) 80 | 20 | - | 480 | 34.8 | 1.00 | 146 | 0.21 | 0.04 |
| Invention Example 3 | (A) 75 | 25 | - | 320 | 33.0 | 0.99 | 138 | 0.04 | 0.01 |
| Invention Example 4 | (B) 85 | 15 | - | 3089 | 38.4 | 1.03 | 148 | 0.48 | 0.09 |
| Invention Example 5 | (B) 80 | 20 | - | 650 | 35.2 | 1.00 | 139 | 0.18 | 0.02 |
| Comparative Example 1 | (A) 95 | 5 | - | 20000 | 40.1 | 1.05 | 164 | 1.00 | 0.78 |
| Comparative Example 2 | - | | 100 | 280 | 32.0 | - | 500 | 10.90 | 8.90 |

### [Example 2]

The following materials were prepared as refractory raw materials: calcined bauxite: 42%, silicon carbide: 20%, coke: 7%, silicon nitride iron: 17%, graphite: 4%, kaolin clay: 5%, agalmatolite powder: 4%, and metal silicon: 1%, the total amount being 100% (%:% by mass).

To 100 parts by mass of the refractory raw materials, 18 parts by mass of the petroleum-based soft pitch mixture of Invention Example 1 in Table 2 of Example 1 was added, followed by mixing to prepare a mud material 1.

Samples before and after heat-keeping the mud material 1 at 70°C for 5 hours were measured using a needle penetration type hardness tester (Crust hardness tester manufactured by Daiki Rika Kogyo Co., Ltd.), and a hardness increase rate was calculated using the formula: {(hardness after heat-keeping) - (hardness before heat-keeping)/(hardness before heat-keeping)} × 100.

Similarly, mud materials 2 to 3 were prepared using the petroleum-based soft pitch mixtures of Invention Examples 2 to 3 in Table 2 of Example 1, and hardness increase rates were obtained in the same manner as in the mud material 1.

20 parts by mass of the petroleum-based soft pitch mixtures of Invention Examples 4 to 5 in Table 2 of Example 1 were added to 100 parts by mass of the refractory raw materials, followed by mixing to prepare mud materials 4 to 5, and hardness increase rates were obtained in the same manner as in the mud material 1.

25 parts by mass of the petroleum-based soft pitch mixture of Invention Example 1 in Table 2 of Example 1 was added to 100 parts by mass of the refractory raw materials, followed by mixing to prepare a mud material 6, and a hardness increase rate was obtained in the same manner as in the mud material 1.

18 parts by mass of the petroleum-based soft pitch mixture of Comparative Example 1 in Table 2 of Example 1 was added to 100 parts by mass of the refractory raw materials, followed by mixing to prepare a mud material 7, and a hardness increase rate was obtained in the same manner as in the mud material 1.

Furthermore, 18 parts by mass of the anhydrous tar of Comparative Example 2 in Table 2 of Example 1 was added to 100 parts by mass of the refractory raw materials, followed by mixing to prepare a conventional mud material, and a hardness increase rate was obtained in the same manner as in the mud material 1. The above results are collectively shown in Table 3.

**[Table 3]**

| No. | Raw materials for mud material | | | | | Hardness increase rate (%) | (Binder raw material No.) |
|---|---|---|---|---|---|---|---|
| | Mixing ratio of refractory raw materials (part by mass) | Mixing ratio of binder raw materials (part by mass) | Binder raw materials (detail) | | | | |
| | | | Petroleum-based soft pitch mixture | | Distilled oil (% by mass) | | |
| | | | Anhydrous tar (% by mass) | Petroleum-based soft pitches [A·B] (% by mass) | | | |
| Mud material 1 | 100 | 18 | (A) 85 | 15 | - | 27 | (Invention Example 1) |
| Mud material 2 | 100 | 18 | (A) 80 | 20 | - | 27 | (Invention Example 2) |
| Mud material 3 | 100 | 18 | (A) 75 | 25 | - | 27 | (Invention Example 3) |
| Mud material 4 | 100 | 20 | (B) 85 | 15 | - | 32 | (Invention Example 4) |
| Mud material | 100 | 20 | (B) 80 | 20 | - | 31 | (Invention Example 5) |
| 5 | | | | | | | |
| Mud material 6 | 100 | 25 | (A) 85 | 15 | - | 29 | (Invention Example 1) |
| Mud material 7 | 100 | 18 | (A) 95 | 5 | - | 41 | (Comparative Example 1) |
| Conventional mud material | 100 | 18 | - | - | 100 | 90 | (Comparative Example 2) |

As is apparent from the results shown in Tables 1, 2, and 3 above, the petroleum-based soft pitch mixtures of Invention Examples 1 to 5 had few volatile components such as benzo [a] pyrene and naphthalene, which made it easy to adjust the viscosity to an appropriate viscosity. The mud materials 1 to 5 obtained by mixing the petroleum-based soft pitch mixtures of Invention Examples 1 to 5 with the refractory raw materials at appropriate ratios could have a small hardness increase rate.

## Claims

1. A petroleum-based soft pitch mixture obtained by mixing:
a petroleum-based soft pitch having a softening point of 40°C or higher and lower than 150°C; and
a distilled oil having a boiling point range of 230°C to 280°C, wherein
a content of the distilled oil is 10% by mass to 45% by mass,
the balance being the petroleum-based soft pitch and unavoidable impurities,
wherein a content of benzo [a] pyrene is less than 200 ppm by mass, and a content of naphthalene is less than 0.70% by mass.

2. The petroleum-based soft pitch mixture according to claim 1, having a viscosity at 60°C of 100 mPa·s to 2400 mPa·s.

3. A closing material for molten metal tapping hole, comprising the petroleum-based soft pitch mixture according to claim 1 or 2, and a refractory raw material.

4. The closing material for molten metal tapping hole according to claim 3, wherein a mixing ratio of the petroleum-based soft pitch mixture with respect to 100 parts by mass of a total amount of the refractory raw material is 10 parts by mass to 25 parts by mass.

## Patentansprüche

1. Weiche Pechmischung auf Erdölbasis, erhalten durch Mischen von:
einem weichen Pech auf Erdölbasis mit einem Erweichungspunkt von 40 °C oder höher und weniger als 150 °C; und
einem destillierten Öl mit einem Siedepunktsbereich von 230 °C bis 280 °C, wobei
der Gehalt an destilliertem Öl 10 Massen-% bis 45 Massen-% beträgt,
der Rest aus dem weichen Pech auf Erdölbasis und unvermeidbaren Verunreinigungen besteht,
wobei der Gehalt an Benzo[a]pyren weniger als 200 ppm beträgt und der Gehalt an Naphthalin weniger als 0,70 Massen-% beträgt.

2. Weiche Pechmischung auf Erdölbasis gemäß Anspruch 1, die eine Viskosität bei 60 °C von 100 mPa·s bis 2400 mPa·s aufweist.

3. Verschlussmaterial für ein Schmelzmetall-Abstichloch, umfassend die weiche Pechmischung auf Erdölbasis gemäß Anspruch 1 oder 2 und ein feuerfestes Rohmaterial.

4. Verschlussmaterial für ein Schmelzmetall-Abstichloch nach Anspruch 3, wobei das Mischungsverhältnis der weichen Pechmischung auf Erdölbasis bezogen auf 100 Masseteile der Gesamtmenge des feuerfesten Rohmaterials 10 Masseteile bis 25 Masseteile beträgt.

## Revendications

1. Mélange de brai gras à base de pétrole obtenu en mélangeant :
un brai gras à base de pétrole ayant un point de ramollissement de 40 °C ou plus et inférieur à 150 °C ; et
une huile distillée ayant un point d'ébullition dans la plage de 230 °C à 280 °C, dans lequel
une teneur en huile distillée est de 10 % en masse à 45 % en masse,
le reste étant le brai gras à base de pétrole et des impuretés inévitables,
dans lequel une teneur en benzo [a] pyrène est inférieure à 200 ppm en masse, et une teneur en naphtalène est inférieure à 0,70 % en masse.

2. Mélange de brai gras à base de pétrole selon la revendication 1, ayant une viscosité à 60 °C de 100 mPa·s à 2 400 mPa·s.

3. Matériau de fermeture pour orifice d'extraction de métal fondu, comprenant le mélange de brai gras à base de pétrole selon la revendication 1 ou 2, et une matière première réfractaire.

4. Matériau de fermeture pour orifice d'extraction de métal fondu selon la revendication 3, dans lequel un rapport de mélange du mélange de brai gras à base de pétrole par rapport à 100 parties en masse d'une quantité totale de matière première réfractaire est de 10 parties en masse à 25 parties en masse.
